# EUROPÄISCHE PATENTSCHRIFT

(11) **EP 0 372 099 B1**
(45) Veröffentlichungstag und Bekanntmachung des Hinweises auf die Patenterteilung: **05.05.1993**
(21) Anmeldenummer: 88120124.8
(22) Anmeldetag: 02.12.1988
(51) Int. Cl.: C21C 5/46

(54) **Kompaktlanze mit Rohrverdrehsicherung**
Compact lance with a safety device against the rotation of tubes
Lance compacte ayant une sécurité contre la rotation des tubes

(43) Veröffentlichungstag der Anmeldung: 13.06.1990
(73) Patentinhaber: BEDA OXYGENTECHNIK ARMATUREN GmbH, 40858 Ratingen (DE)
(72) Erfinder: Bayer, Reinhardt, D-4100 Duisberg 29 (DE)
(74) Vertreter: Schulte, Jörg, Dipl.-Ing.

(56) Entgegenhaltungen:
- EP-A- 0 025 151
- DE-A- 2 443 561
- DE-A- 3 003 665
- DE-C- 2 327 595
- DE-U- 7 613 150

## Beschreibung

Die Erfindung betrifft eine Kompaktlanze für die Sauerstoffzufuhr beim Brennvorgang mit Spannkopf und Spannzange, über die das in das Griffstück eingeführte Brennrohr durch Verdrehen festgelegt ist, einer sich an das Brennrohr anlegenden, von der Dichtungshülse teilweise eingefaßten und zwischen Spannzange und Innenbohrungsvorsprung komprimierbaren axialen Dichtung und einer das Brennrohrende aufnehmenden Hülse, wobei im Griffstück ein über einen Bedienungshebel betätigbares Schnellschlußventil und eine Schlackenrücklaufsicherung angeordnet ist.

Derartige Kompaktlanzen dienen dazu, die beim Brennvorgang teilweise abschmelzende Sauerstofflanze bzw. das Brennrohr so mit dem Griffstück zu verbinden, daß es während der Handhabung sicher gelagert ist. Derartige Brennrohrhalter sind aus der DE-GM 19 39 917 sowie der DE-PS 23 27 595 grundsätzlich bekannt. Bei diesen bekannten Brennrohrhaltern besteht das Griffstück aus einem Gehäuse mit Innenbohrung, wobei die Innenbohrung mehrfach abgesetzt ist, um jeweils unterschiedliche Einbauten abzustützen bzw. zu lagern. In die Innenbohrung wird von oben her das Brennrohr durch den Spannkopf und die Spannzange hindurchgeführt, bis das Brennrohrende in der Hülse gelagert ist, über die die Schlackenrücklaufsicherung geöffnet werden kann. Beim Festschrauben des Spannkopfes wird die Spannzange so zusammengedrückt, daß sie das eingeführte Brennrohr festlegt. Gleichzeitig wird dabei die Spannzange in Richtung Brennrohrende verschoben und dadurch eine in einer Dichtungshülse teilweise gelagerte Dichtung entsprechend komprimiert. Über diese komprimierte Dichtung erfolgt ein gasdichter Abschluß zwischen Sauerstoffschlauch zugewandtem Ende und dem Spannzange und Spannkopf aufweisenden Ende des Griffstücks. Je nach Brennvorgang werden geradeverlaufende Brennrohre oder aber auch bogenförmige Brennrohre eingesetzt, wobei im letzteren Fall die Gefahr besteht, daß durch das entsprechend ungünstig belastete Brennrohr die Spannzange mitverdreht wird, was leicht zu einem unbeabsichtigten Lösen des Brennrohres führen kann, bzw. das Erreichen der Brennstelle mit dem gebogenen Rohrende erschwert. Aus der DE-GM 75 08 317 ist ein Schnellschlußventil bekannt, das über einen angelenkten Bedienungshebel betätigt werden kann. Ein Mitverdrehen der Spannzange wird nicht verhindert.

Der Erfindung liegt die Aufgabe zugrunde, eine verdrehgesicherte Kompaktlanze in sicherer und handhabungsfreundlicher Bauweise zu schaffen.

Die Aufgabe wird erfindungsgemäß dadurch gelöst, daß zwischen Spannzange und Dichtungshülse eine Buchse vorgesehen ist, die in der Innenbohrung des Griffstücks axial verschiebbar und radial fixierbar, die Spannzange entsprechend beeinflussend angeordnet ist.

Durch die in das Griffstück eingesetzte und entsprechend in radialer Richtung festzuhaltende Buchse ist es möglich, ein unbeabsichtigtes Öffnen der Spannzange durch Verdrehen des Brennrohres sicher zu verhindern. Spannzange und in radialer Richtung festgesetzte Buchse sind so ausgebildet, daß mit der radial fixierten Buchse gleichzeitig auch die Spannzange festgesetzt ist, kann auch bei sich drehendem Brennrohr der einmal hergestellte Verschluß nicht öffnen. Ja es ist sogar möglich, das Verdrehen des Brennrohres überhaupt zu verhindern, weil es entsprechend gleichbleibend im Griffstück fixiert ist. Damit ist eine Verdrehsicherung geschaffen, die in das Griffstück integriert ist, so daß eine vorteilhaft kurze Bauweise eingehalten werden kann.

Dei einer zweckmäßigen Ausbildung der Erfindung ist vorgesehen, daß die Buchse ein Langloch und das Griffstück eine Radialbohrung mit in das Langloch eingreifender Zapfenschraube aufweist. Dadurch ist die radiale Beweglichkeit erhalten, die benötigt wird, um die Dichtung zu komprimieren, während ein Verdrehen in radialer Richtung sicher verhindert ist. Wie oben bereits erwähnt, ist dadurch auch das Mitdrehen der Spannzange und damit ein unbeabsichtigtes Öffnen unterbunden. Die Erfindung zeichnet sich gerade in diesem Punkt dadurch aus, daß ohne großen Aufwand auch im nachhinein entsprechende Brennrohrhalter noch umgerüstet werden können, wobei das Anbringen einer entsprechenden Radialbohrung keinen wesentlichen Aufwand darstellt und die Buchse im nachhinein in die Innenbohrung des Halters bzw. Griffstücks eingeschoben werden kann.

Um das Mitdrehen der Spannzange bei drehendem Brennrohr zu verhindern ist es möglich, die Buchse mit der Spannzange zu verbinden, vorzugsweise zu verschweißen. Eine solche Ausbildung ist insbesondere für Nachrüstungen zweckmäßig, wobei für Neubauten zweckmäßigerweise Spannzange und Buchse einteilig ausgebildet sind.

Aufgrund der Zwischenschaltung der Buchse und mit dem Ziel einer kompakten Bauweise ist es vorteilhaft, wenn, wie erfindungsgemäß vorgesehen, der die Spannzange aufnehmende Teil des Griffstücks ein mit dem Innengewinde des Spannkopfes korrespondierendes Außengewinde aufweist. Damit wird der Spannkopf beim Festdrehen bzw. Festlegen des Brennrohres am Griffstück entlanggeschoben, da beide das miteinander korrespondierende Gewinde aufweisen. Gleichzeitig wird dabei der Druck auf die Spannzange ausgeübt, der das Festlegen am Brennrohr bewirkt. Damit ergibt sich ein insgesamt geschlossenes Gehäuse, das bezüglich der Kompaktheit aber auch der gesamten Sicherheit vorteilhaft ist, zumal weitere Einzelteile wie Gewindestift u.ä. nicht mehr benötigt werden.

Beim Einschieben des Brennrohres in die Innenbohrung des Griffstückes bleibt eine Beschädigung der Dichtung sicher unterbunden, indem der Innendurchmesser der Buchse mit dem der nachfolgenden Dichtung übereinstimmend ausgebildet ist. Das Brennrohr wird somit von vornherein in der Buchse geführt so daß es in die Dichtung schonend eingeführt werden kann. Es versteht sich, daß hier eine entsprechende Anpassung vorgenommen wird, um ein Durchschieben durch die Buchse sicherzustellen.

Das durch die Buchse bereits zentrierte Brennrohr wird nicht nur schonend durch die Dichtung hindurchgeführt, sondern gleichzeitig auch endseitig genau festgelegt, wenn die das Brennrohr aufnehmende Hülse eine dem Brennrohr entsprechend angepaßte Schulter aufweist, während der weiter in die Innenbohrung hineinragende Hülsenteil als Stößel für ein nachfolgendes, druckbelastetes Ventil dienend ausgebildet ist. Das Brennrohr rutscht somit beim Einführen in das Griffteil automatisch in die entsprechende Erweiterung der Hülse mit Schulter hinein, bis es vor die Schulter stößt, so daß dann, wenn ein entsprechend druckbelastetes Ventil nachgeschaltet ist, dieses durch entsprechendes Verschieben der Hülse automatisch aufgestoßen werden kann. Dabei kann vorteilhafterweise die entsprechend ausgebildete Schulter auf der anderen Seite dazu benutzt werden, das Rückschieben der Hülse bei herausgenommenem Brennrohr zu erleichtern.

Das Rückfedern der Hülse wird dabei nach einer zweckmäßigen Ausbildung der Erfindung dadurch erreicht, daß die Schulter der Hülse in der Innenbohrung federelastisch abgestützt ist. Mit der Entlastung der Hülse durch Herausnehmen beispielsweise des Brennrohres wird diese somit automatisch in die Ausgangslage zurückgeschoben, um für ein erneutes Einführen des Brennrohres gesichert zu sein.

Das Rückschieben des Brennrohres ist ja erforderlich, um den Schließvorgang des Ventils zu ermöglichen. Das Einschieben des Brennrohres erfolgt dabei von Hand und letztlich während des Festlegens des Brennrohres durch das Verschieben des Spannkopfes. Daher muß ein entsprechendes Spiel vorgegeben sein, das durch die federelastische Anordnung der Hülse vorgegeben ist.

Die federelastische Ausbildung erreicht man zweckmäßigerweise dadurch, daß auf der Außenwand des Hülsenteils ein sich auf einem Vorsprung in der Innenbohrung abstützende Spiralfeder ausgebildet ist. Diese Spiralfeder dichtet ab und bewirkt eine entsprechend günstige Lagerung der Hülse innerhalb der Innenbohrung des Griffstückes.

Ausreichendes Fleisch für eine sichere Lagerung der Zapfenschraube steht vorzugsweise dann zur Verfügung, wenn die Radialbohrung für die Zapfenschraube im Bereich einer Gehäuseverdickung des Griffstücks ausgebildet ist. In gewisser Hinsicht kann diese Gehäuseverdickung auch gleichzeitig dazu benutzt werden, den Verschiebeweg des Spannkopfes zu begrenzen, wenn sich dies aus Sicherheitsgründen beispielsweise für die Hülse als notwendig herausstellen sollte. Diese Gehäuseverdickung hat darüber hinaus den Vorteil, daß die Spitze der Zapfenschraube in ausreichender Länge als Zapfen ausgebildet werden kann, um so zwar die Längsverschieblichkeit der Buchse zu erreichen, die radiale Verdrehbarkeit aber zu unterbinden.

Ein sicheres Festlegen des Brennrohres innerhalb des Griffstücks wird weiter dadurch erreicht, daß die Spannzange am freien Ende keilförmig und mit den abgerundeten Kanten einer Hülse zusammenwirkend ausgebildet ist, wobei die Hülse über einen radialen Ansatz verfügt, auf dem der Spannkopf mit einem zwischengelagerten Kugellager aufliegt. Das Kugellager sorgt dabei dafür, daß eine gleichmäßige und sichere Übertragung der entsprechenden Bewegung auf die Hülse und über diese auf die Spannzange erfolgt.

Zur Verbesserung der Handhabungsfreundlichkeit und Erhöhung der Sicherheit ist die besondere Ausbildung der Gas-und Schlackenrücklaufsicherung in Form der Absperrventilscheibe, der Sintermetallscheibe und des unabhängigen Gasrückschlagventils sowie des ergonomisch geformten Bedienungshebels und des strömungsgünstig ausgebildeten Schnellschlußventiles vorgesehen.

Die Erfindung zeichnet sich dadurch aus, daß ein sehr kompakt ausgebildetes Griffstück zur Verfügung gestellt wird, in dem auf die zweckmäßige Weise eine Verdrehsicherung integriert ist, die eine einfache und sichere Handhabung des Brennrohrhalters auch dann sicherstellt, wenn gebogene oder abgewinkelte Brennrohre zum Einsatz kommen. Neben der kompakten Bauweise ist durch die erfindungsgemäße Ausbildung auch zusätzlich erreicht, daß alle innerhalb des Griffstücks untergebrachten Einzelteile auf die notwendige Anzahl zurückgeführt sind, wobei damit eine verringerte Reserveteilhaltung erreicht wird. Hervorzuheben ist aber vor allem die mit der kompakt ausgebildeten Ausführungsform des Brennrohrhalters erhöhte Betriebssicherheit.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: einen Brennrohrhalter im Längsschnitt,
- Fig. 2: einen Stahlbehälter mit Brennlanze,
- Fig. 3: einen Brennrohrhalter mit eingeführtem Brennrohr und
- Fig. 4: die Gesamtansicht einer Kompaktlanze im Längsschnitt.

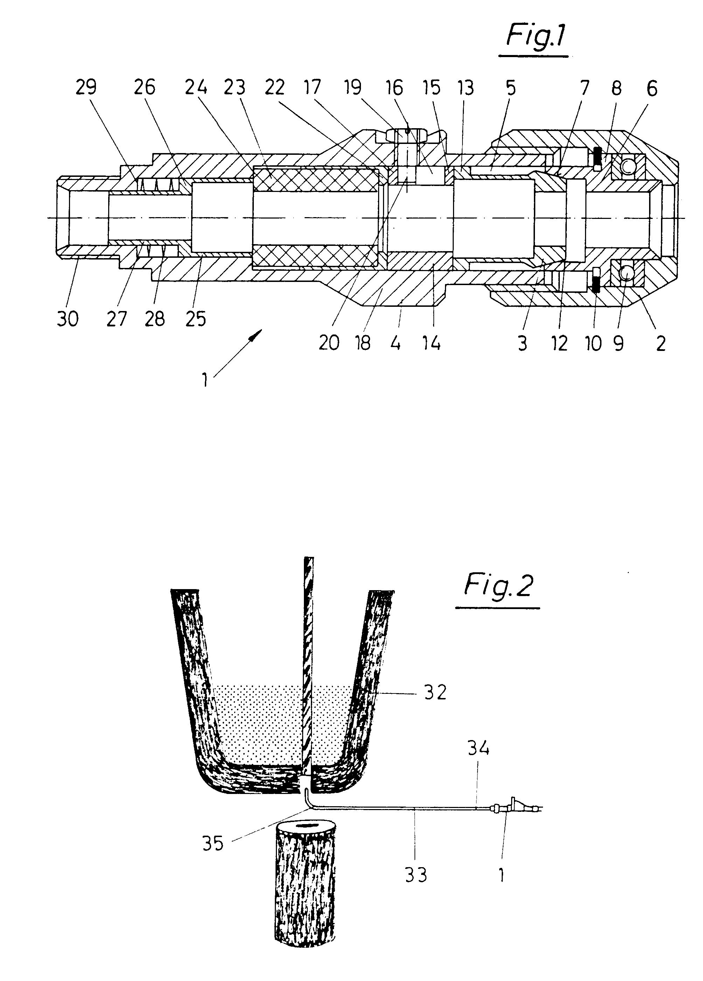

Der in Fig. 1 dargestellte Brennrohrhalter (1) ist im Schnitt wiedergegeben. Dadurch werden die Einzelteile auch in ihrer Wirkungsweise deutlich wiedergegeben. Der Brennrohrhalter weist zunächst einmal an dem das hier nicht dargestellte Brennrohr aufweisenden Ende einen Spannkopf (2) und eine davon umgebene Spannzange (3) auf. Beide sind im Griffstückhalter (4) geführt bzw. an ihm geführt, wobei die Spannzange (3) als Einzelteil innerhalb der Innenbohrung (5) des Griffhalters (4) verschieblich geführt ist.

Auf die Spannzange (3) wirkt eine im Spannkopf (2) angeordnete Hülse (6) ein, die über Kanten (7) verfügt, die mit der Keilspitze (12) der Spannzange (3) korrespondieren. Auf den Ansatz (8) der Hülse (6) wirkt über ein Kugellager (9) der Spannkopf (2) direkt ein, der durch ein Verdrehen damit die Hülse (6) gleichmäßig verschieben kann. Um sicherzustellen, daß die Hülse (6) beim Lösevorgang auch vom Spannkopf (2) mitgenommen werden kann, ist ein Seegerring (10) vorgesehen.

Beim Verdrehen des Spannkopfes (2) wird, wie bereits erwähnt, die Hülse (6) auf die Keilspitze (12) der Spannzange (3) aufgeschoben. Dann wird zunächst die gesamte Spannzange (3) in Längsrichtung der Innenbohrung (5) verschoben, bis das Brennrohrende, wie weiter später noch erläutert, festgesetzt ist. Die federnde Wirkung der Spannzange (3) erfolgt durch entsprechende Ausbildung der Keilspitze und des anschließenden Teils, wobei die Spannzange (3) endseitig eine ringförmige Schulter (13) aufweist.

Die Schulter (13) liegt an der Buchse (14) an, die damit praktisch eine Verlängerung der Spannzange (3) darstellt. Beide sind, wie noch weiter hinten erläutert ist, miteinander durch Schweißung verbunden. Die Schulter (13) der Spannzange (3) liegt auf dem Schulteransatz (15) der Buchse (14) auf. Die Buchse (14) läßt sich zusammen mit der Spannzange (3) in Längsrichtung des Griffhalters (4) verschieben, weil die Buchse (14) über ein Langloch (16) verfügt, in das eine Zapfenschraube (19) hineinragt. Dadurch ist die axiale Bewegung gewährleistet, eine radiale Bewegung oder Verdrehung aber ausgeschlossen.

Die Zapfenschraube (19) ist in eine entsprechende Radial bohrung (17) im Griffhalter (4) eingedreht, wobei sie mit ihrem Zapfen (20) bis dicht an das Brennrohr heranreicht. Die Radialbohrung (17) ist im Bereich einer Gehäuseverdickung (18) ausgebildet, um das notwendige Fleisch zur Verfügung zu haben, das benötigt wird, um einen sicheren Sitz der Zapfenschraube (19) zu erreichen.

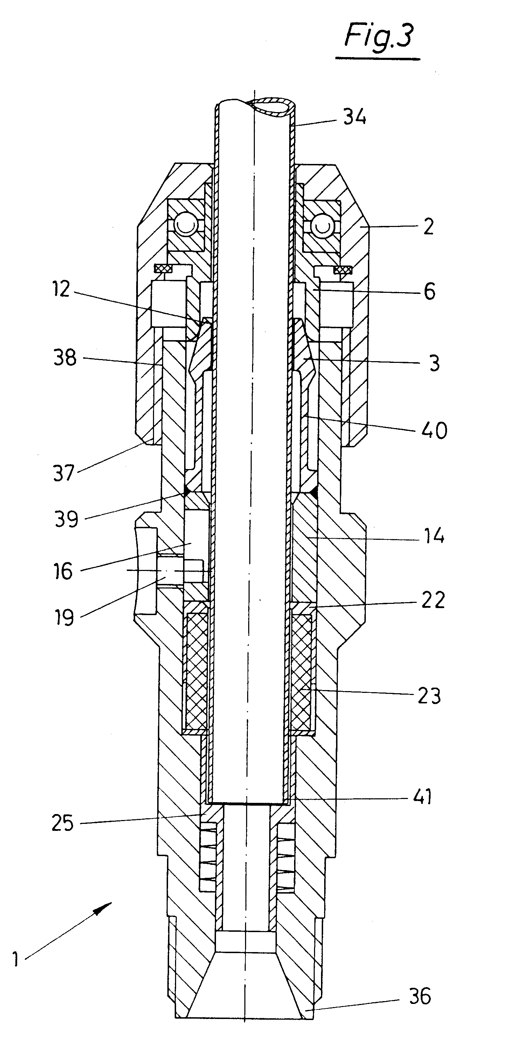

An die Buchse (14) schließt sich eine Dichtungshülse (22) ein, die die Dichtung (23) teilweise umgibt. Bei Verschiebung in Längsrichtung der Innenbohrung (5) des Brennrohrhalters (1) wird auch die Dichtungshülse (22) mitverschoben. Da die Dichtung (23) nicht in Längsrichtung verschoben werden kann, also nicht ausweichen kann, wird sie entsprechend im unteren Teil komprimiert wobei sie sich dicht und damit dichtend an die Brennrohrwandung anlegt. Entsprechendes zeigt Fig. 3. Die Dichtung (23) wird beim Komprimieren zwischen der Dichtungshülse (22) und einem Innenbohrungsvorsprung (24) verspannt, so daß sie sich dichtend um das Brennrohr herumlegen muß.

Dichtung (23) und Buchse (14) weisen zweckmäßigerweise übereinstimmende Innendurchmesser auf, so daß die Buchse (14) gleichzeitig als Führung für die Dichtung dient. An die Dichtung (23) schließt sich dann eine weitere Hülse (25) an, die eine dem Außendurchmesser des Brennrohres angepaßte Aufweitung mit Schulter (26) hat, so daß das Brennrohrende (41) sicher eingeführt werden kann.

Jenseits der Schulter (26) ist das untere Hülsenteil (27) mit einer Spiralfeder (28) versehen, um so eine gewisse elastische Abstützung am Vorsprung (29) zu erreichen. Endseitig des ganzteilig ausgebildeten Griffstückes (4) ist ein Außengewinde (30) zur Verbindung mit dem hier nicht dargestellten Sauerstoffschlauch vorgesehen.

Fig. 1 verdeutlicht, daß aufgrund der geschickten Ausbildung der Innenbohrung (5) alle Einzelteile vom dem Brennrohr zugewandten Ende in das einstückig ausgebildete Griffstück (4) eingeschoben werden können. Damit ist eine wesentliche Vereinfachung möglich und darüber hinaus eine sehr kompakte Bauweise erreicht.

Fig. 2 zeigt einen Stahlbehälter (32), in den von unten her eine Brennlanze (33) eingeführt werden soll. Das entsprechende Brennrohr (34) ist endseitig im Brennrohrhalter (1) bzw. dem Griffstück (4) festgelegt, wobei durch die erfindungsgemäße Ausbildung auch dann eine sichere Fixierung möglich ist, wenn das Brennrohr (34) einen entsprechenden Rohrbogen (35) aufweist.

Vorteilhafterweise können mit einem gemäß Fig. 3 ausgebildeten Brennrohrhalter (1) eine Vielzahl von Brennrohren (34) üblichen Querschnittes eingesetzt werden. Vor allem können so auch sehr geringe Durchmesser aufweisende Brennrohre sicher fixiert werden, die ansonsten leicht zu einem Drehen neigen, wenn sie, wie aus Fig. 1 zu ersehen ist, gehandhabt werden sollen.

Fig. 3 zeigt den Brennrohrhalter (1) gemäß Fig. 1 in vergrößerter Darstellung, wobei hier das Brennrohr (34) eingeführt, allerdings noch nicht festgelegt ist. Diese Figur zeigt den sehr kompakten Aufbau des Griffstückes (4), wobei der Spannkopf (2) über die Spannzange (3) und das oberste Stück des Griffstückes (4) hinausragt. Das Verschieben des Spannkopfes (2) erfolgt dabei durch entsprechendes Verdrehen, wobei das Griffstück (4) ein Außengewinde (37) und der Spannkopf (2) ein Innengewinde (38) aufweisen. Beide Gewinde (37, 38) korrespondieren miteinander, wobei beim Verdrehen des Spannkopfes (2) dieser automatisch in Richtung unteres Ende (36) des Griffstückes (4) verschoben wird. Dieses Verschieben beider Teile (2, 4) gegeneinander bewirkt auch ein Verschieben der Hülse (6) innerhalb des Spannkopfes (2) und über diesen wiederum ein Verschieben der Spannzange (3) in Richtung unteres Ende (36). An die Spannzange (3) schließt die Buchse (14) an, die in beiden Richtungen aufgrund der Kopplung beider Teile aneinander zusammen mit der Spannzange (3) hin- und herbewegt wird. Die Buchse (14) wiederum beeinflußt die Dichtungshülse (22) und Dichtung (24), die sich aufgrund entsprechender Komprimierung nunmehr an die Außenwandung des Brennrohres (34) anlegt. Bis zu diesem Zeitpunkt aber auch noch etwas darüber hinaus wird das gesamte Brennrohr (34) mitverschoben, so daß die Hülse (25) in der Innenbohrung (5), die das Brennrohrende (41) aufnimmt, ebenfalls in axialer Richtung sich bewegen muß. Dies kann sie ohne Probleme, weil ein Langloch (16) innerhalb der Innerbohrung (5) vorgesehen ist.

Beim Lösen des Brennrohrhalters (1) wird der Spannkopf (2) in die umgekehrte Richtung verdreht, wobei er die Spannzange (3) mitverschiebt, beide Teile im Übergangsbereich ja so aneinanderreiben, daß sie quasi eine Einheit darstellen. Darüber hinaus wird auch die Hülse (25) aufgrund der Ausbildung der Spiralfeder (28) automatisch zurückfahren, wobei die Schulter einschließlich der gesamten Hülse (25) dabei in Richtung oberes Ende des Brennrohrhalters (1) verschoben bzw. zurückgeschoben werden. Auch die übrigen Teile einschließlich der Spannzange (3) können dabei in der Innenbohrung (5) zurückbewegt werden bzw. selbsttätig zurückschieben, da die Hülse (6) mit ihren schrägen Kanten (7) vom Spannkopf (2) mitgenommen wird.

Buchse (14) und Spannzange (3) sind über eine Schweißstelle (39) miteinander verbunden, so daß sie beide die gleiche Bewegung ausführen, ohne sich in radialer Richtung bewegen bzw. verdrehen zu können.

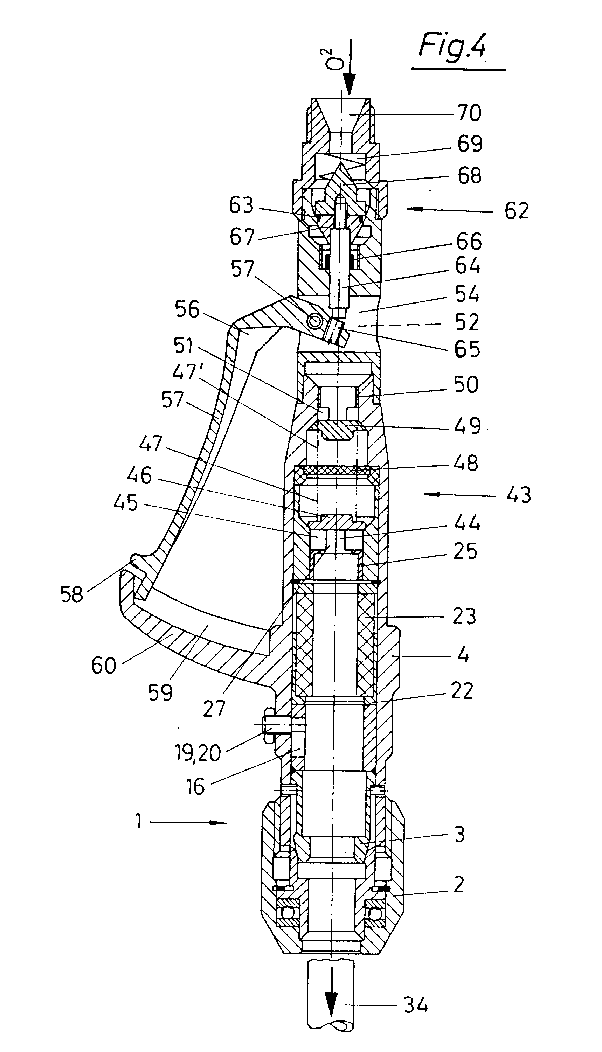

Fig.4zeigt eine Kompaktlanze in Gesamtansicht, wobei das gesamte Griffstück (4) im Schnitt wiedergegeben ist. Das Brennrohr (34) ist nur angedeutet, das von oben her in den Spannkopf (2) und durch die Spannzange (3) hindurch eingeführt werden kann. Durch Verschrauben des Spannkopfes (2) wird dann das Brennrohr (34) im Brennrohrhalter (1) wie weiter vorn beschrieben festgelegt.

Im Inneren des Griffstückes (4) ist die Gas- und Schlackenrücklaufsicherung (43) untergebracht, wobei durch Verschieben der Hülse (25) und damit des Hülsenteils (27) das Hülsenende (44) mit den Ausnehmungen (45) zum Gasdurchtritt auf die Absperrventilscheibe (46) einwirkt. Zweckmäßigerweise bilden Hülse (25) und Absperrventilscheibe (46) eine Baueinheit. Die Absperrventilscheibe (46) ist über die Feder (47) belastet, so daß dann eine Abdichtung gesichert ist, wenn kein Brennrohr (34) eingeführt ist.

Ist ein Brennrohr (34) eingeführt und damit die Absperrventilscheibe (46) aus ihrem Dichtsitz herausgehoben, so kann das Gas durch das Griffstück (4) hindurchströmen, wenn es mit dem nötigen Druck ansteht und dementsprechend das Gasrückschlagventil (49) mit der Führung (50) aufdrückt. Die Sintermetallscheibe (48) ist gasdurchlässig und sorgt dafür, daß im Falle eines Schlackenrücklaufs oder ähnlicher Beeinträchtigungen dieses Material über die Sintermetallscheibe (48) nicht weiter in das Griffstück (4) eindringen kann. Die Sintermetallscheibe (48) ist entsprechend festgelegt bzw. zwischen die Federn (47, 47') eingespannt. In der Führung (50) sind Ausnehmungen (51) vorgesehen, um einen Gasdurchtritt zu gewährleisten.

Bevor das Gas das Gasrückschlagventil (49) und damit Gas- und Schlackenrücklaufsicherung (43) passieren kann, muß es zunächst das Schnellschlußventil (62) durchströmt haben. Dieses Schnellschlußventil (62) wird durch den im Führungsschlitz (54) um die Drehachse (55) verschwenkbaren Bedienungshebel (56) geöffnet. Das Gas kann dann nach Passieren des Schnellschlußventils (62) durch die Überstromkanäle (52), die hier nicht im einzelnen dargestellt sind, in den weiteren Bereich des Griffstückes (4) vordringen, um dann schließlich durch das Brennrohr (34) hindurch zu strömen.

Der Griff (57) des Bedienungshebels (56) ist ergonomisch ausgeführt, um einen sicheren Halt zu gewährleisten. Beim Verschwenken des Bedienungshebels (56) kann die Hand des Bedienenden nicht in den Bereich der Hebelführung (59) im Führungsarm (60) hineinrutschen, weil endseitig ein abgerundeter Nocken (58) vorgesehen ist.

Durch den Bedienungshebel (56) wird wie erwähnt das Schnellschlußventil (62) geöffnet bzw. bei Loslassen des Bedienungshebels (56) wieder automatisch geschlossen. Hierzu verfügt das Schnellschlußventil (62) über einen Dichtsitz (63), aus dem es durch den Kolben (64) herausgehoben wird, der endseitig durch den Bedienungshebel (56) bzw. den darin eingeschraubten Führungsstift (65) in Längsrichtung des Griffstückes (4) verschoben wird. Über den Dichtring (66) ist eine wirksame Abdichtung geschaffen, wobei das Gas über hier nicht dargestellte Überstromkanäle (52) parallel zum Kolben (64) fließen kann, wenn das Schnellschlußventil (62) aus dem Dichtsitz (63) angehoben ist, was gegen die Kraft der Feder (69) erfolgt.

Beidseitig des Dichtsitzes (63) ist das Schnellschlußventil (62) strömungsgünstig dadurch ausgebildet, daß nach unten hin sich ein abgerunderter Strömungsansatz (67) an den Dichtsitz (63) und nach oben hin ein spitz zulaufender Strömungskegel (68) anschließt. Nach oben hin erweitert sich die Sauerstoffeintrittsbohrung (70), wobei hier ggf. ein Filter eingesetzt werden kann.

## Patentansprüche

1. Kompaktlanze für die Sauerstoffzufuhr beim Brennvorgang mit Spannkopf und Spannzange, über die das in das Griffstück eingeführte Brennrohr festgelegt ist, einer sich an das Brennrohr anlegenden, von der Dichtungshülse teilweise eingefaßten und zwischen Spannzange und Innenbohrungsvorsprung komprimierbaren axialen Dichtung und einer das Brennrohrende aufnehmenden Hülse, wobei im Griffstück ein über einen Bedienungshebel betätigbares Schnellverschlußventil und eine Gas- und Schlackenrücklaufsicherung angeordnet sind,
**dadurch gekennzeichnet,**
daß zwischen Spannzange (3) und Dichtungshülse (22) eine Buchse (14) vorgesehen ist, die in der Innenbohrung (5) des Griffstücks (4) axial verschiebbar und radial fixierbar, die Spannzange entsprechend beeinflussend angeordnet ist.

2. Kompaktlanze nach Anspruch 1,
**dadurch gekennzeichnet,**
daß die Buchse (14) ein Langloch (16) und das Griffstück (4) eine Radialbohrung (17) mit in das Langloch eingreifender Zapfenschraube (19) aufweist.

3. Kompaktlanze nach Anspruch 1,
**dadurch gekennzeichnet,**
daß die Buchse (14) mit der Spannzange (3) verbunden, vorzugsweise verschweißt ist.

4. Kompaktlanze nach Anspruch 1,
**dadurch gekennzeichnet,**
daß Spannzange (3) und Buchse (14) einteilig ausgebildet sind.

5. Kompaktlanze nach Anspruch 1,
**dadurch gekennzeichnet,**
daß der die Spannzange (3) aufnehmende Teil des Griffstückes (4) ein mit dem Innengewinde (38) des Spannkopfes (2) korrespondierendes Außengewinde (37) aufweist.

6. Kompaktlanze nach Anspruch 1,
**dadurch gekennzeichnet,**
daß der Innendurchmesser der Buchse (14) mit dem der nachfolgenden Dichtung (23) übereinstimmend ausgebildet ist.

7. Kompaktlanze nach Anspruch 1,
**dadurch gekennzeichnet,**
daß die das Brennrohr (34) aufnehmende Hülse (26) eine dem Brennrohr entsprechend angepaßte Schulter (26) aufweist, während der weiter in die Innenbohrung (5) hineinragende Hülsenteil (27) als Stößel für ein nachfolgendes, druckbelastetes als Gas- und Schlackenrücklaufsicherung (43) wirkendes Ventil dienend ausgebildet ist.

8. Kompaktlanze nach Anspruch 1 und Anspruch 7,
**dadurch gekennzeichnet,**
daß die Schulter (26) der Hülse (25) in der Innenbohrung (5) federelastisch abgestützt ist.

9. Kompaktlanze nach Anspruch 8,
**dadurch gekennzeichnet,**
daß auf der Außenwand des Hülsenteils (27) eine sich auf einem Vorsprung (29) in der Innenbohrung (5) abstützende Spiralfeder (28) ausgebildet ist.

10. Kompaktlanze nach Anspruch 2,
**dadurch gekennzeichnet,**
daß die Radialbohrung (17) für die Zapfenschraube (19) im Bereich einer Gehäuseverdickung (18) des Griffstückes (4) ausgebildet ist.

11. Kompaktlanze nach Anspruch 1,
**dadurch gekennzeichnet,**
daß die Spannzange (3) am freien Ende keilförmig und mit den abgerundeten Kanten (7) einer Hülse (6) zusammenwirkend ausgebildet ist, wobei die Hülse über einen radialen Ansatz (8) verfügt auf dem der Spannkopf (2) mit einem zwischengelagerten Kugellager (9) aufliegt.

12. Kompaktlanze nach Anspruch 1 und Anspruch 7,
**dadurch gekennzeichnet,**
daß als Gas- und Schlackenrücklaufsicherung (43) wirkendes Venitl eine federbelastete, mit dem Hülsenteil (27) verbundene Absperrventilscheibe (46) die gasdurchlässige Sintermetallscheibe (48) und ein vom Bedienungshebel (56) unabhängig schließendes Gasrückschlagventil (49) mit Führung (50) aufweist.

13. Kompaktlanze nach Anspruch 1,
**dadurch gekennzeichnet,**
daß der um die im Griffstück (4) angeordnete Drehachse (55) schwenkbare Bedienungshebel (56) in Richtung Griffstück leicht gebogen ausgebildet ist und am der Hebelführung (59) zugewandten Ende einen abgerundeten Nocken (58) aufweist.

14. Kompaktlanze nach Anspruch 1 und Anspruch 13,
**dadurch gekennzeichnet,**
daß das über den Bedienungshebel (56) betätigbare Schnellschlußventil (62) beidseitig des Drehsitzes (63) strömungsgünstig ausgebildet ist.

## Claims

1. Compact lance for the supply of oxygen during the combustion process with a closer and collet, by which the combustion pipe introduced into the handle is fixed, with an axial gasket bearing against the combustion pipe, partly enclosed by the sealing sleeve and able to be compressed between the collet and inner bore projection, and a sleeve receiving the end of the combustion pipe, a rapid closure valve able to be actuated by way of an operating lever and a gas and slag non-return device being located in the handle, characterised in that provided between the collet (3) and sealing sleeve (22) is a bush (14), which is arranged to slide axially in the inner bore (5) of the handle (4), can be fixed radially and is arranged to influence the collet accordingly.

2. Compact lance according to Claim 1, characterised in that the bush (14) comprises a slot (16) and the handle (4) a radial bore (17) with a trunnion screw (19) engaging in the slot.

3. Compact lance according to Claim 1, characterised in that the bush (14) is connected, preferably welded to the collet (3).

4. Compact lance according to Claim 1, characterised in that the collet (3) and bush (14) are constructed in one piece.

5. Compact lance according to Claim 1, characterised in that the part of the handle (4) receiving the collet (3) comprises an external thread (37) corresponding to the internal thread (38) of the closer (2).

6. Compact lance according to Claim 1, characterised in that the internal diameter of the bush (14) is constructed to correspond to that of the subsequent gasket (23).

7. Compact lance according to Claim 1, characterised in that the sleeve (26) receiving the combustion pipe (34) has a shoulder (26) adapted to correspond to the combustion pipe, whereas the sleeve part (27) projecting further into the inner bore (5) is constructed to serve as a plunger for a subsequent, pressure-loaded valve acting as a gas and slag non-return device (43).

8. Compact lance according to Claim 1 and Claim 7, characterised in that the shoulder (26) of the sleeve (25) is supported resiliently in the inner bore (5).

9. Compact lance according to Claim 8, characterised in that fitted on the outer wall of the sleeve part (27) is a coil spring (28) supported on a projection (29) in the inner bore (5).

10. Compact lance according to Claim 2, characterised in that the radial bore (17) for the trunnion screw (19) is constructed in the region of a thickened portion (18) of the housing of the handle (4).

11. Compact lance according to Claim 1, characterised in that the collet (3) is constructed to be wedge-shaped at the free end and to cooperate with the rounded edges (7) of a sleeve (6), the sleeve having a radial shoulder (8), on which the closer (2) rests by an intermediate ball bearing (9).

12. Compact lance according to Claim 1 and Claim 7, characterised in that a valve acting as a gas and slag non-return device (43) comprises a spring-loaded shut off valve disc (46) connected to the sleeve part (27), the gas-permeable sintered metal disc (48) and a gas non-return valve (49) closing independently of the operating lever (56), with a guide (50).

13. Compact lance according to Claim 1, characterised in that the operating lever (56) able to tilt about the pivot pin (55) arranged in the handle (4) is constructed to be slightly bent in the direction of the handle and at the end facing the lever guide (59) comprises a rounded lug (58).

14. Compact lance according to Claim 1 and Claim 13, characterised in that the rapid closure valve (62) able to be actuated by way of the operating lever (56) is constructed to promote flow on both sides of the rotary seat (63).

## Revendications

1. Lance compacte pour l'amenée d'oxygène lors du processus de combustion avec tête de serrage et pince de serrage, par l'intermédiaire de laquelle est fixé le tube de combustion introduit dans la poignée, avec une garniture d'étanchéité disposée contre le tube de combustion, partiellement entourée par le manchon d'étanchéité et pouvant être comprimée axialement entre la pince de serrage et une saillie d'alésage interne et une douille recevant l'extrémité du tube de combustion, une valve à fermeture rapide actionnable par un levier de manoeuvre et une sécurité contre le retour du gaz et des scories étant disposés dans la poignée,
caractérisée en ce
qu'une douille (14) est prévue entre la pince de serrage (3) et le manchon d'étanchéité (22), qui est disposée coulissant axialement et fixable radialement dans l'alésage interne (5) de la poignée (4), en agissant en correspondance sur la pince de serrage.

2. Lance compacte selon la revendication 1,
caractérisée en ce
que la douille (14) présente un trou oblong (16) et la poignée (4) un alésage radial (17) avec vis sans tête à téton fileté (19) en prise dans le trou oblong.

3. Lance compacte selon la revendication 1,
caractérisée en ce
que la douille (14) est reliée, de préférence soudée, à la pince de serrage (3).

4. Lance compacte selon la revendication 1,
caractérisée en ce
que la pince de serrage (3) et la douille (14) sont réalisées d'une seule pièce.

5. Lance compacte selon la revendication 1,
caractérisée en ce
que la partie de la poignée (4) recevant la pince de serrage (3) présente un filetage externe (37) correspondant au taraudage interne (38) de la tête de serrage (2).

6. Lance compacte selon la revendication 1,
caractérisée en ce
que le diamètre interne de la douille (14) est réalisé coïncidant avec la garniture d'étanchéité (23) suivante.

7. Lance compacte selon la revendication 1,
caractérisée en ce
que le manchon (26) recevant le tube de combustion (34) présente un épaulement (26) adapté en correspondance au tube de combustion, tandis que la partie de manchon (27) en saillie plus loin à l'intérieur de l'alésage interne (5) est réalisé sous forme de coulisseau servant pour une valve suivante chargée en pression agissant en tant que sécurité de retour de gaz et de scories (43).

8. Lance compacte selon la revendication 1 et la revendication 7,
caractérisée en ce
que l'épaulement (26) du manchon (25) est appuyé à élasticité de ressort dans l'alésage interne (5).

9. Lance compacte selon la revendication 8,
caractérisée en ce
qu'un ressort spiral (28) s'appuyant sur une saillie (29) dans l'alésage interne (5) est réalisé sur la paroi externe de la partie de manchon (27).

10. Lance compacte selon la revendication 2,
caractérisée en ce
que l'alésage radial (17) pour la vis sans tête à téton fileté (19) est réalisé dans la région d'un épaississement de carter (18) de la poignée (4).

11. Lance compacte selon la revendication 1,
caractérisée en ce
que la pince de serrage (3) est réalisée cunéiforme à l'extrémité libre et coopérant avec les arêtes (7) arrondies d'un manchon (6), le manchon disposant d'une saillie radiale (8) sur laquelle la tête de serrage (2) repose par un roulement à billes (9) interposé.

12. Lance compacte selon la revendication 1 ou la revendication 7,
caractérisée en ce
qu'une valve agissant comme sécurité contre le retour de gaz et de scories (43) qui présente un disque de soupape d'arrêt (46) relié à la partie du manchon (27), le disque en métal fritté (48) perméable aux gaz et une valve anti-retour de gaz (49) avec guidage (50) se fermant indépendamment du levier de manoeuvre (56).

13. Lance compacte selon la revendication 1,
caractérisée en ce
que le levier de manoeuvre (56) pivotant autour de l'axe de rotation (55) disposé dans la poignée (4) est réalisé légèrement courbé en direction de la poignée et présente à l'extrémité tournée vers le guidage de levier (59) une saillie arrondie (58).

14. Lance compacte selon la revendication 1 et la revendication 13,
caractérisée en ce
que la valve à fermeture rapide (62) actionnable par le levier de manoeuvre (56) est réalisée, des deux côtés du siège de pivotement (63), de manière favorisant l'écoulement.
